# EUROPÄISCHE PATENTANMELDUNG

(11) **EP 4 001 462 A1**
(43) Veröffentlichungstag der Anmeldung: **25.05.2022**
(21) Anmeldenummer: 20020552.4
(22) Anmeldetag: 23.11.2020
(51) Int. Cl.: C25B 1/04, C25B 15/08, B01D 53/00, F25J 1/00, F25J 1/02, B01D 53/26, C25B 9/05

(54) **VERFAHREN UND ANLAGE ZUR HERSTELLUNG EINES FLÜSSIGSAUERSTOFF- PRODUKTS UND EINES FLÜSSIGWASSERSTOFFPRODUKTS**

(71) Anmelder: Linde GmbH, 82049 Pullach (DE)
(72) Erfinder: Peschel, Andreas, 82515 Wolfratshausen (DE); Cardella, Umberto, 80805 München (DE); Hentschel, Benjamin, 80689 München (DE); Neuhaus, Oliver, 82049 Pullach (DE); Yayli, Ayhan, 80992 München (DE); Otte, Daniel, 86343 Königsbrunn (DE)
(74) Vertreter: Fischer, Werner

(57) **Zusammenfassung**

Ein Verfahren zur Herstellung eines Flüssigsauerstoffprodukts und eines Flüssigwasserstoffprodukts wird vorgeschlagen, wobei ein zumindest Wasser enthaltender Einsatzstrom einer Elektrolyse unterworfen wird, wobei in der Elektrolyse anodenseitig ein gasförmiger Rohsauerstoffstrom und kathodenseitig ein gasförmiger Rohwasserstoffstrom gebildet werden, wobei der gasförmige Rohwasserstoffstrom getrocknet und unter Erhalt eines Reinwasserstoffstroms von Verunreinigungen, insbesondere von Sauerstoff, befreit wird und der Reinwasserstoffstrom unter Verwendung eines zweiten Kältemittels unter Erhalt eines Flüssigwasserstoffprodukts zumindest teilweise verflüssigt wird, wobei zumindest ein Teil des zweiten Kältemittels und/oder zumindest ein Teil des Reinwasserstoffstroms unter Verwendung eines ersten Teils eines ersten Kältemittels gekühlt wird oder werden, und wobei der gasförmige Rohsauerstoff getrocknet und von Verunreinigungen, insbesondere von Wasserstoff, befreit wird. Es ist vorgesehen, dass zumindest ein Teil des Reinsauerstoffstroms unter Verwendung eines zweiten Teils des ersten Kältemittels unter Erhalt eines Flüssigsauerstoffprodukts zumindest teilweise verflüssigt wird. Eine entsprechende Anlage ist ebenfalls Gegenstand der vorliegenden Erfindung.

## Beschreibung

Die Erfindung betrifft ein Verfahren und eine Anlage zur Herstellung eines Flüssigsauerstoffprodukts und eines Flüssigwasserstoffprodukts.

### Hintergrund der Erfindung

Die Wasserstoffherstellung im industriellen Maßstab basiert derzeit hauptsächlich auf Kohlenwasserstoffen und umfasst beispielsweise die Dampfreformierung von Erdgas. Anstelle einer erneuten Erläuterung des bereits Bekannten wird auf einschlägige Fachliteratur wie die Artikel "Gas Production, 2. Processes" und "Hydrogen, 2. Production" in Ullmann's Encyclopedia of Industrial Chemistry" (2012) verwiesen.

Um regenerativ erzeugten elektrischen Strom nutzen und Kohlendioxidemissionen reduzieren zu können, wird zunehmend auch die Wasserelektrolyse zur Herstellung von Wasserstoff eingesetzt. Auch Sauerstoff kann durch Wasserelektrolyse hergestellt werden. Entsprechende Verfahren werden weiter unten eingehender erläutert.

Die vorliegende Erfindung stellt sich die Aufgabe, die Herstellung eines Flüssigsauerstoffprodukts und eines Flüssigwasserstoffprodukts unter Einsatz einer Wasserelektrolyse zu verbessern.

### Offenbarung der Erfindung

Diese Aufgabe wird durch ein Verfahren und eine Anlage zur Herstellung eines Flüssigsauerstoffprodukts und eines Flüssigwasserstoffprodukts mit den jeweiligen Merkmalen der unabhängigen Patentansprüche gelöst. Ausgestaltungen sind jeweils Gegenstand der abhängigen Patentansprüche und der nachfolgenden Beschreibung.

Vor der Erläuterung der Merkmale und Vorteile der vorliegenden Erfindung werden einige Grundlagen der vorliegenden Erfindung näher erläutert und einige bei der Beschreibung der Erfindung verwendete Begriffe definiert.

Bei der klassischen Wasserelektrolyse wird eine wässrige alkalische Lösung, typischerweise von Kaliumhydroxid, als Elektrolyt verwendet (AEL, Alkalische Elektrolyse). Die Elektrolyse mit einer uni- oder bipolaren Elektrodenanordnung erfolgt dabei bei Atmosphärendruck oder im industriellen Maßstab auch deutlich darüber. Neuere Entwicklungen bei der Wasserelektrolyse umfassen die Verwendung von protonenleitenden lonenaustauschmembranen (SPE, Solid Polymer Electrolysis; PEM, Proton Exchange Membranes), bei der das zu elektrolysierende Wasser an der Anodenseite bereitgestellt wird. Auch Elektrolysetechnologien unter Verwendung einer Anionenaustauschmembran (AEM, Anion Exchange Membrane) werden eingesetzt.

Die bisher genannten Verfahren der Wasserelektrolyse zählen zu den Niedertemperaturverfahren, bei denen das zu elektrolysierende Wasser in der Flüssigphase vorliegt. Daneben wird auch die sogenannte Dampfelektrolyse eingesetzt, die ebenfalls mit alkalischen Elektrolyten (also als AEL) mit angepassten Membranen, beispielsweise Polysulfonmembranen, sowie unter Verwendung von Festoxidelektrolysezellen (SOEC, Solid Oxide Electrolysis Cells) durchgeführt werden können. Letztere umfassen insbesondere dotiertes Zirkondioxid oder Oxide anderer seltener Erden, die bei höheren Temperaturen leitfähig werden.

Der Begriff der Elektrolyse soll nachfolgend sämtliche dieser Verfahren umfassen. Insbesondere die Niedertemperaturelektrolyse (PEM, AEL, AEM) eignet sich für einen flexiblen Betrieb, der die optimale Nutzung erneuerbarer Energien ermöglicht. Sämtliche Verfahren können in der Erfindung eingesetzt werden.

Die konventionelle Prozesskette zur Herstellung von flüssigem und gasförmigem Sauerstoff (LOX, GOX) umfasst herkömmlicherweise die Tieftemperaturzerlegung von Luft in bekannten Luftzerlegungsverfahren. Die Herstellung von Luftprodukten in flüssigem oder gasförmigem Zustand durch Tieftemperaturzerlegung von Luft in Luftzerlegungsanlagen ist ebenfalls hinlänglich bekannt und beispielsweise bei H.-W. Häring (Hrsg.), Industrial Gases Processing, Wiley-VCH, 2006, insbesondere in Abschnitt 2.2.5, "Cryogenic Rectification", beschrieben.

Ein alternatives Verfahren zur Herstellung von GOX ist die Vakuum-Druckwechseladsorption (vPSA). Bei diesem Verfahren wird Sauerstoff aus der Umgebungsluft über ein Adsorberbett abgetrennt, das unter Vakuumbedingungen (d.h. auf einem unteratmosphärischen Druckniveau) regeneriert wird. Die Regeneration des Adsorberbetts bei Vakuumbedingungen ermöglicht einen niedrigeren Adsorptionsdruck, wodurch die erforderliche Verdichtung des Umgebungsluftstroms verringert wird. Daher ist für die vPSA-Einheit nur ein Gebläse erforderlich, um den Druck des Speisestroms zu erhöhen. Für die Regeneration des Adsorberbetts ist jedoch eine Vakuumpumpe erforderlich.

Aufgrund des niedrigen Adsorptionsdrucks ist die Sauerstoffreinheit in einer vPSA auf etwa 95 % begrenzt, wobei Argon als Hauptverunreinigung im Produktstrom enthalten ist. Andere Verunreinigungen können je nach der Qualität der Speiseluft auftreten. Bislang wird in der Literatur kein Versuch zur Verflüssigung von Sauerstoff aus einer vPSA berichtet.

Sauerstoff entsteht auch als Nebenprodukt bei der Wasserelektrolyse, aber auch in anderen Arten der Elektrolyse, wie z.B. der Kohlendioxidelektrolyse. Die Hauptverunreinigungen in so erhaltenem Sauerstoff resultieren aus dem Übergang des Gases von der Kathoden- auf die Anoden- bzw. Sauerstoffseite und aus den im Speisewasser bzw. einem anderen Speisestrom enthaltenen Verunreinigungen. Im Gegensatz zu Sauerstoff, der aus der Umgebungsluft erzeugt wird, sind in der Regel kein Stickstoff oder Argon im Sauerstoff enthalten. Prinzipiell kann der Sauerstoffdruck in einer Elektrolyseanlage beliebig eingestellt werden. Aufgrund der drastischeren Bedingungen in der Elektrolysezelle bei höherem Sauerstoffdruckniveau, insbesondere bei der PEM, ist es jedoch in der Regel erwünscht, den Elektrolyseur mit einem niedrigen Sauerstoffdruck zu betreiben. Der wassergesättigte Sauerstoff wird daher in der Regel an die Atmosphäre abgegeben. PEM-Elektrolyseure, die bei hohem Sauerstoffdruck betrieben werden, weisen in den Komponenten der Elektrolysezellen höhere Materialanforderungen und aufgrund eines höheren Schlupfs von Sauerstoff auf die Kathodenseite eine geringere Ausbeute auf.

Wasserstoff kann durch Abkühlen und anschließende Kondensation gegen ein geeignetes Kühlmedium wie Wasserstoff oder Helium verflüssigt werden. Vor der Kondensation muss der Wasserstoff vorgekühlt werden, um die Effizienz der Verflüssigung zu erhöhen. Üblicherweise wird zur Vorkühlung verdampfender Flüssigstickstoff (LIN) verwendet.

Die Begriffe "Flüssigsauerstoffprodukt" und "Flüssigwasserstoffprodukt" werden jeweils für flüssige Medien verwendet, die aus dem erfindungsgemäßen Verfahren bzw. einer entsprechenden Anlage ausgeführt (exportiert) werden. Diese müssen dabei nicht ausschließlich aus Sauerstoff bzw. Wasserstoff bestehen, weisen Sauerstoff bzw. Wasserstoff jedoch in einem Gehalt von mehr als 80%, 90%, 95% oder 99%, insbesondere auf molarer Basis, auf.

Die Begriffe "Rohsauerstoff " und "Rohwasserstoff' werden dagegen für Medien des jeweils angegebenen Aggregatzustands verwendet, in denen die Gehalte an Sauerstoff bzw. Wasserstoff geringer sind als in dem Flüssigsauerstoffprodukt bzw. dem Flüssigwasserstoffprodukt. Das Flüssigsauerstoffprodukt bzw. das Flüssigwasserstoffprodukt werden durch entsprechende Aufreinigung zumindest eines Teils des Rohsauerstoffs bzw. Rohwasserstoffs gebildet. Rohsauerstoff enthält insbesondere beträchtliche Mengen an Wasserstoff sowie Wasser als zu entfernende Komponenten. Rohwasserstoff enthält dagegen insbesondere beträchtliche Mengen an Sauerstoff sowie Wasser als zu entfernende Komponenten.

### Merkmale und Vorteile der Erfindung

Die Erfindung schlägt ein Verfahren zur Herstellung eines Flüssigsauerstoffprodukts und eines Flüssigwasserstoffprodukts vor, wobei ein zumindest Wasser enthaltender Einsatzstrom einer Elektrolyse unterworfen wird, wobei in der Elektrolyse anodenseitig ein gasförmiger Rohsauerstoffstrom und kathodenseitig ein gasförmiger Rohwasserstoffstrom gebildet werden, wobei der gasförmige Rohwasserstoffstrom getrocknet und unter Erhalt eines Reinwasserstoffstroms von Verunreinigungen, insbesondere von Sauerstoff, befreit wird.

Der Reinwasserstoffstrom wird unter Verwendung eines in Form eines oder mehrerer Kältemittelströme bereitgestellten zweiten Kältemittels unter Erhalt eines Flüssigwasserstoffprodukts zumindest teilweise verflüssigt, wobei zumindest ein Teil des Reinwasserstoffstroms und/oder zumindest ein Teil des zweiten Kältemittels unter Verwendung eines ersten Teils eines in Form eines oder mehrerer Kältemittelströme bereitgestellten ersten Kältemittels gekühlt wird. Der gasförmige Rohsauerstoffstrom wird ebenfalls getrocknet und von Verunreinigungen, insbesondere von Wasserstoff, befreit.

Hierbei erfolgt die Befreiung des Rohsauerstoffstroms von Verunreinigungen unter Erhalt des gasförmigen Reinsauerstoffstroms in einer vorteilhaften Ausgestaltung der Erfindung durch katalytische Oxidation zumindest eines Teils der Verunreinigungen und Abtrennung der Oxidationsprodukte, insbesondere Wasser, und/oder durch Chemisorption, und der ungeachtet der spezfischen Ausgestaltung der Aufreinigung erhaltene Reinsauerstoffstrom wird erfindungsgemäß unter Verwendung eines zweiten Teils des ersten Kältemittels unter Erhalt eines Flüssigsauerstoffprodukts zumindest teilweise verflüssigt.

Die erfindungsgemäß vorgeschlagenen Maßnahmen und Ausgestaltungen hiervon werden nachfolgend nochmals mit anderen Worten erläutert.

Bei der in einer Ausgestaltung der Erfindung eingesetzten katalytischen Oxidation reagiert der in dem Rohsauerstoffstrom insbesondere in Spuren vorliegende Wasserstoff mit überschüssigem Sauerstoff zu Wasser. Der auf diese Weise erhaltene, im Wesentlichen wasserstofffreie Rohsauerstoffstrom wird gekühlt und getrocknet, um Wasser weitestgehend, d.h. bis auf einen Restgehalt von typischerweise 0,1 ppm, zu entfernen.

Bei der Chemisorption, die in einer Ausgestaltung der Erfindung alternativ oder zusätzlich eingesetzt werden kann, können grundsätzlich bekannte Einrichtungen eingesetzt werden. Insbesondere können diese ein sogenanntes Guard Bed aufweisen, das sich bei der Chemisorption verbraucht und das periodisch ausgetauscht werden kann.

Der entsprechend bearbeitete Rohsauerstoffstrom, nun als Reinsauerstoffstrom bezeichnet, wird in einem Wärmetauscher gegen verdampfendes Kältemittel, wie z.B. flüssigen Stickstoff, verflüssigt, der insbesondere in einem Stickstoff-Kältemittelkreislauf bereitgestellt werden kann. Dieses Kältemittel wird hier als "erstes Kältemittel" bezeichnet, wobei ein erster Anteil dieses Kältemittels zur Verflüssigung des Rohsauerstoffstroms eingesetzt wird. Nicht kondensierbare Gase, falls vorhanden, werden geflasht und der verbleibende LOX, d.h. das Flüssigsauerstoffprodukt, kann in einem Lagertank auf einem geeigneten Druckniveau gelagert bzw. optional in einer kryogenen LOX-Pumpe auf Druck gebracht und/oder für den Transport in Container abgefüllt werden.

Der kathodenseitig des erfindungsgemäß eingesetzten Elektrolyseurs erzeugte Wasserstoff wird einer Wasserstoffverflüssigungseinheit zugeführt, typischerweise auf einem Druck zwischen 15 und 40 bar. Die Wasserstoffverflüssigungseinheit befindet sich in mindestens einer typischerweise mittels Vakuum und/oder Perlit isolierten Coldbox. Die Wasserstoffverflüssigereinheit dient zur Verflüssigung und weiteren Reinigung des elektrochemisch erzeugten Wasserstoffgases, d.h. des gasförmigen Rohwasserstoffstroms, mit Hilfe eines oder mehrerer Kältekreisläufe mit Kompressor(en) und Expansionseinrichtung(en), z.B. Turboexpandern.

Kälteleistung für die Kühlung und Verflüssigung des im Elektrolyseur erzeugten Sauerstoffs, sowie für die Kühlung und/oder Verflüssigung des im Elektrolyseur erzeugten Wasserstoffs in der Wasserstoffverflüssigungseinheit wird durch das erste Kältemittel bereitgestellt, das in einem Wärmetauscher, z.B. einem im Gegenstrom betriebenen Rippen-Platten-Wärmetauscher, verdampft und/oder erwärmt werden kann. Dieses Kältemittel kann auf verschiedenen Temperaturniveaus bereitgestellt werden, z.B. als Flüssigstickstoff bei Sättigungstemperatur, insbesondere auf Temperaturen zwischen 77 K und 110 K, jedoch in Form eines oder mehrerer kalter Stickstoffgasströme bei Temperaturen über 80 K.

Erfindungsgemäß wird, wie erwähnt, der in der erläuterten Weise gebildete Reinwasserstoffstrom unter Verwendung des zweiten Kältemittels verflüssigt. Das zur Verflüssigung des Reinwasserstoffstroms verwendete zweite Kältemittel wurde bereits angesprochen. Insbesondere können dabei Wasserstoff oder Helium eingesetzt werden. Das zweite Kältemittel oder ein Teil davon kann unter Verwendung des ersten Teils des ersten Kältemittels, bei dem es sich um das soeben erwähnte Kältemittel handeln kann, vorgekühlt. Ebenso kann auch der Reinwasserstoffstrom entsprechend vorgekühlt werden. Der in der erläuterten Weise gebildete Reinsauerstoffstrom wird unter Verwendung eines zweiten Teils dieses ersten Kältemittels unter Erhalt eines Flüssigsauerstoffprodukts zumindest teilweise verflüssigt.

Mit anderen Worten wird ein im Rahmen der vorliegenden Erfindung ein einziges Kältemittel, insbesondere ein Flüssigstickstoffstrom (LIN-Strom), in Form zweier Anteile für die Vorkühlung des der Verflüssigung zugeführten Wasserstoffstroms und/oder des oder der Kältemittelströme in der Wasserstoffverflüssiger-Coldbox, oder jeweils eines Teils hiervon, sowie für die GOX-Verflüssigung verwendet. Das erste Kältemittel kann unter Verwendung einer integrierten Stickstoff-Kälteanlage oder eines Stickstoffverflüssigers oder einer Luftzerlegungsanlage erzeugt werden.

Im Rahmen der vorliegenden Erfindung kann das erste Kältemittel eine oder mehrere Komponenten umfassen, die aus Stickstoff, Luft, Argon, Kohlendioxid, Neon, Sauerstoff oder einem oder mehreren Kohlenwasserstoffen, jeweils in flüssigem und/oder gasförmigem Zustand, ausgewählt sind.

Die Kühlung und/oder die zumindest teilweise Verflüssigung zumindest eines Teils des Reinwasserstoffstroms und/oder eine Kühlung zumindest eines Teils des ersten Kältemittels und/oder die zumindest teilweise Verflüssigung zumindest eines Teils des Reinsauerstoffstroms können insbesondere räumlich voneinander getrennt durchgeführt werden.

Beispielsweise kann eine Stickstoffkühleinheit oder ein Stickstoffverflüssiger zur Bereitstellung des ersten Kältemittels verwendet werden, das für die Kühlung bei der Wasserstoffverflüssigung in der erläuterten Weise und die Verflüssigung des Sauerstoffs aus dem Elektrolyseur eingesetzt wird. Die Stickstoffkühleinheit oder der Stickstoffverflüssiger kann beispielsweise mindestens einen Wärmetauscher aufweisen, sowie mindestens eine Stickstoffturbine und mindestens einen Stickstoffverdichter (z.B. einen Turbokompressor). Die Stickstoffturbine(n) kann bzw. können mit einer die mechanische Energie dissipierenden Bremse und/oder mit einer Generatorbremse und/oder Kompressorbremse auf derselben Welle (Booster oder Compander) zur Rückgewinnung der mechanischen Energie durch Stromerzeugung und/oder durch Verdichtung von Stickstoff (Warm- oder Kaltverdichtung) ausgestattet sein, wodurch die für den Stickstoffverdichter erforderliche Motorleistung reduziert wird.

Die Stickstoffkühleinheit oder der Stickstoffverflüssiger kann in einem getrennten, z.B. mit einer Perlitisolierung versehenen und/oder vakuumisolierten Kühlboxbehälter untergebracht werden. Der zweite Teil des ersten Kältemittels, der erfindungsgemäß als Kühlmittel zur Abkühlung und Verflüssigung des Sauerstoffs aus dem Elektrolyseur verwendet wird, wird vorzugsweise in einem separaten Wärmetauscher zu den abzukühlenden bzw. zu verflüssigenden Wasserstoffströmen und innerhalb einer separaten Coldbox erwärmt, um die Bildung explosiver Gemische zu verhindern.

Vorteilhafterweise wird die Elektrolyse anodenseitig bei einem ersten Druckniveau betrieben und das Flüssigsauerstoffprodukt wird auf ein zweites Druckniveau, das niedriger als das erste Druckniveau liegt, entspannt. Vorteilhafterweise kann dabei die Energie, die aus dem Druckunterschied zwischen dem ersten Druckniveau und dem zweiten Druckniveau resultiert, zumindest teilweise für eine Bereitstellung des ersten und/oder des zweiten Kältemittels genutzt werden. Es kann also insbesondere eine sogenannte Boosterturbine bzw. ein Compander eingesetzt werden.

In einer Ausgestaltung der vorliegenden Erfindung kann insbesondere zumindest ein weiteres Gas, insbesondere Stickstoff und/oder Argon und/oder ein Wasserstoff und/oder einen oder mehrere Kohlenwasserstoffe enthaltendes Gasgemisch, insbesondere Erdgas, unter Verwendung des ersten Kältemittels zumindest teilweise verflüssigt werden.

Im Rahmen der vorliegenden Erfindung kann insbesondere ein Sterling-Prozess zur Kühlung des ersten Kältemittels verwendet werden.

Im Rahmen der vorliegenden Erfindung kann insbesondere auch eine Speicherung des Flüssigsauerstoffprodukts und/oder des Flüssigstickstoffprodukts und/oder des ersten und/oder des zweiten Kältemittels in einem oder mehreren Speichervolumen vorgesehen sein, das oder die in einer ersten Betriebsphase auf- und in einer zweiten Betriebsphase abgebaut wird oder werden. Die erste und die zweite Betriebsphase können insbesondere alternieren. Auf diese Weise lässt sich ein flexibler Lastbetrieb gemäß den Bedingungen des Energiemarkts bei kontinuierlicher Versorgung mit dem Flüssigsauerstoffprodukt und/oder dem Flüssigstickstoffprodukt realisieren.

Die erste Betriebsphase kann insbesondere in einem Zeitraum mit geringeren Stromkosten und die zweite Betriebsphase in einem Zeitraum mit höheren Stromkosten durchgeführt werden.

Im Rahmen der vorliegenden Erfindung kann insbesondere eine Druckerhöhung zumindest eines Teils des Flüssigsauerstoffprodukts in flüssigem Zustand, insbesondere unter Verwendung einer kryogenen Pumpe, und eine anschließende zumindest teilweise Verdampfung, insbesondere in einem Wärmetauscher, unter Erhalt eines gasförmigen Drucksauerstoffprodukts vorgenommen werden. Die Druckerhöhung kann insbesondere direkt nach der Verflüssigung oder nach der Entnahme aus einem Speichertank erfolgen.

Eine Ausgestaltung der vorliegenden Erfindung umfasst eine Verdichtung des gasförmigen Reinsauerstoffstroms nach der Befreiung von den Verunreinigungen in einem Verdichter oder Turbinenbooster, wobei ein "Turbinenbooster" eine Maschine darstellt, in der ein Verdichter oder eine Verdichterstufe mit einem Expander oder einer Expanderstufe mechanisch gekoppelt ist.

In einer weiteren Ausgestaltung der vorliegenden Erfindung kann zur Bereitstellung des ersten Kältemittels Luft unter Verwendung eines oder mehrerer Membranverfahren und/oder eines oder mehrerer Adsorptionsverfahren aufgereinigt werden. Auf diese Weise kann das Inventar an dem ersten Kältemittel aufgefüllt bzw. können entsprechende Verluste ausgeglichen werden.

Vorteilhafterweise wird bzw. werden das erste und/oder das zweite Kältemittel unter Verwendung eines Gases aus einer Luftzerlegungsanlage bereitgestellt, wie bereits zuvor angesprochen.

Zur Bereitstellung von Verflüssigungsleistung der genannten und anderer flüssiger Produkte kann bzw. können ein oder mehrere Verdichter eingesetzt werden, der oder die durch einen oder mehrere elektrische Motoren und/oder unter Verwendung einer oder mehrerer Verbrennungsturbinen betrieben werden. Verbrennungsturbinen können insbesondere mit einem Gasgemisch umfassend Wasserstoff und/oder Sauerstoff und/oder Erdgas angetrieben werden. Auch Dampfturbinen können eingesetzt werden.

In einer besonders bevorzugten Ausgestaltung der Erfindung ist vorgesehen, dass der zumindest Wasser enthaltende Einsatzstrom oder das in diesem enthaltene Wasser einer Aufbereitung unterworfen wird, die zumindest eine Entfernung von Argon, insbesondere durch Strippen, umfasst. Auf diese Weise kann ein besonders reines Sauerstoffprodukt und Wasserstoffprodukt erhalten werden.

Die vorliegende Erfindung erlaubt in Ausgestaltungen eine besonders vorteilhafte Optimierung des Druckes des Elektrolyseurs, um auf diese Weise optimierte Drücke für die Verflüssigung des Reinsauerstoffstroms und Reinwasserstoffstroms zu erhalten. Die erfindungsgemäß vorgenommene Elektrolyse wird in entsprechenden Ausgestaltungen also bei derartigen Drücken betrieben.

Für die Verflüssigung und Reinigung von Sauerstoff und Wasserstoff sind grundsätzlich hohe Drücke vorteilhaft, weil hierdurch geringere Volumenströme bearbeitet werden müssen und entsprechende Apparateteile daher kleiner gebaut werden können. Dagegen sind niedrige Drücke für den Betrieb des Elektrolyseurs vorteilhaft, weil auf diese Weise der Stromverbauch und der sog. Crossover, also die Migration von Komponenten von Anoden- zu Kathodenseite und umgekehrt minimiert wird.

Die Elektrolyse kann dabei insbesondere kathodenseitig (d.h. wasserstoffseitig) auf einem Druckniveau von 10 bis 100 bar, bevorzugt von 10, 15 oder 20 bis 30 bar (abs.), und anodenseitig (d.h. sauerstoffseitig) auf einem Druckniveau von 2 bis 10 bar (abs.), bevorzugt von 3 bis 6 bar (abs.), betrieben werden. Ein anodenseitiges Druckniveau von 10 bis 50 bar (abs.), insbesondere von 15 bis 30 bar (abs.) ist besonders vorteilhaft, um eine Entspannung des Roh- oder Reinsauerstoffstroms in einer Turbine vornehmen zu können. In anderen Fällen kann hier auch ein Druckniveau von 500 mbar (rel.) bis 10 bar (rel.) ausreichend sein, um den Sauerstoff verflüssigen zu können, wobei sich ein Druck von mehr als 7 bar (rel.) aufgrund der geringeren Wasserbeladung und der damit vereinfachten Wasserentfernung als besonders vorteilhaft erwiesen hat. Bei niedrigeren Drücken von beispielsweise 2 bis 7 bar oder 2 bis 6 bar müsste ggf. eine Verdichtung des Roh- oder Reinsauerstoffstroms und/oder eine Abkühlung des Rohsauerstoffstroms vor der Wasserentfernung, beispielsweise mittels TSA, unter Verwendung einer vorgenommen werden. Auch solche Drücke können verwendet werden und es kann ggf. auch eine Druckwechseladsorption (PSA) mit Entnahme des Adsorbats auf über- oder unteratmosphärischem Druckniveau sog. Vakuum-PSA, VPSA) eingesetzt werden.

TSA Trockenung ist auch schon mit niedrigeren Druck notwendig, dann mpüsste u.U. eine Kälteanlage verwendet werden, um die Sauerstoffstrom abzukühlen. Es gibt ja sehr schöne Konzepte dafür. > 7 bara wäre es für TSA vortilhaft.

Bei der PEM und der AEM kann der anoden- und kathodenseitige Druck jeweils flexibel variiert werden, so dass sich entsprechende Verfahren als besonders vorteilhaft erweisen. Bei der AEL liegt der Druck anoden- und kathodenseitig typischerweise jeweils bei 10 bis 50 bar, insbesondere bei 10 bis 30 bar.

Die vorliegende Erfindung erstreckt sich auch auf eine Anlage zur Herstellung eines Flüssigsauerstoffprodukts und eines Flüssigwasserstoffprodukts, die dafür eingerichtet ist einen zumindest Wasser enthaltenden Einsatzstrom einer Elektrolyse zu unterwerfen und in der Elektrolyse anodenseitig einen gasförmigen Rohsauerstoffstrom und kathodenseitig einen gasförmigen Rohwasserstoffstrom zu bilden, und die ferner dazu eingerichtet ist, den gasförmigen Rohwasserstoffstrom zu trocknen und unter Erhalt eines Reinwasserstoffstroms von Verunreinigungen, insbesondere von Sauerstoff, zu befreien. Die Anlage weist Mittel auf, die dafür eingerichtet sind, den Reinwasserstoffstrom unter Verwendung eines in Form eines oder mehrerer Kältemittelströme bereitgestellten zweiten Kältemittels unter Erhalt eines Flüssigwasserstoffprodukts zumindest teilweise zu verflüssigen und dabei zumindest einen Teil des zweiten Kältemittels und/oder zumindest einen Teil des Reinwasserstoffstroms unter Verwendung eines ersten Teils eines in Form eines oder mehrerer Kältemittelströme bereitgestellten ersten Kältemittels zu kühlen. Die Anlage weist ferner Mittel auf, die dafür eingerichtet sind, den gasförmigen Rohsauerstoff zu trocknen und von Verunreinigungen, insbesondere von Wasserstoff, zu befreien.

Vorteilhafterweise sind Mittel zur Befreiung des Rohsauerstoffstroms von Verunreinigungen unter Erhalt eines gasförmigen Reinsauerstoffstroms durch katalytische Oxidation zumindest eines Teils der Verunreinigungen und Abtrennung der Oxidationsprodukte, insbesondere Wasser, und/oder durch Chemisorption bereitgestellt, sowie ungeachtet der spezifischen Art der Aufreinigung erfindungsgemäß Mittel, die dafür eingerichtet sind, zumindest einen Teil des Reinsauerstoffstroms unter Verwendung eines zweiten Teils des ersten Kältemittels unter Erhalt eines Flüssigsauerstoffprodukts zumindest teilweise zu verflüssigen.

Zu der erfindungsgemäß bereitgestellten Anlage und ihren Merkmalen sei auf den auf die obigen Erläuterungen bezüglich des erfindungsgemäßen Verfahrens ausdrücklich verwiesen, da diese eine entsprechende Anlage in gleicher Weise betreffen. Entsprechendes gilt insbesondere für eine Ausgestaltung einer entsprechenden Anlage, die vorteilhafterweise zur Ausführung eines entsprechenden Verfahrens in einer beliebigen Ausgestaltung eingerichtet ist.

Nachfolgend werden nochmals die in unterschiedlichen Ausgestaltungen der vorliegenden Erfindung erzielbaren Vorteile zusammengefasst.

Durch die vorliegende Erfindung wird eine Nutzung von "grünem" Sauerstoff als Nebenprodukt ohne (zusätzlichen) Kohlendioxid-Footprint in Form eines flüssigen Sauerstoffprodukts in vorteilhafter Weise möglich. Es kann insbesondere eine Reduzierung des Footprint einer Sauerstoffspeicherung und effizienterer Transport von Sauerstoff aufgrund der höheren Dichte von Flüssigsauerstoff ggü. gasförmigem Sauerstoff erzielt werden. Der Einsatz von Flüssigsauerstoff im Vergleich zu gasförmigem Sauerstoff ist deutlich vielseitiger. Insbesondere kann ein variabler Auslassdruck eingestellt werden.

Die Erfindung ermöglicht eine flexible Produktion von Flüssigsauerstoff und gasförmigem Sauerstoff, die zur "Energiespeicherung" (sog. Power-to-LOX und Power-to-LH2) genutzt werden kann, indem intermittierende erneuerbare Energie und/oder günstige Strompreise verwendet werden, um die Kapazität der produzierenden Anlagen je nach Verfügbarkeit kostengünstiger elektrischer Energie schnell hoch- oder herunterzufahren. Ein wesentlicher Vorteil ist dabei die Produktion von Flüssigsauerstoff und Flüssigwasserstoff mit derselben Ausrüstung (Kühl- und Verflüssigungseinheit). Kostengünstiger hochreiner Flüssigsauerstoff und Flüssigwasserstoff kann ohne den Einsatz einer kapital- und energieintensiven Luftzerlegungsanlage hergestellt werden, ohne dass zusätzliche Kapital- und Betriebskosten anfallen. Insbesondere ist kein zusätzliches Betriebs- bzw. Wartungspersonal erforderlich und es entstehen keine zusätzlichen Kosten für Technik, Konstruktion und Bau einer Luftzerlegungsanlage. Es müssen keine zusätzlichen Kompressoren bzw. Expandereinheiten, keine zusätzlichen Rektifikationseinheiten, keine zusätzlichen Versorgungseinrichtungen wie Kühlwassersystem, Instrumentenluft usw. bereitgestellt werden.

Der Stromverbrauch zur Herstellung von Flüssigsauerstoff aus einer Luftzerlegungsanlage beträgt etwa 0,7 kWh/kg produziertem Flüssigsauerstoff. Unter Berücksichtigung der Tatsache, dass der gasförmiger Sauerstoff ein Nebenprodukt eines Elektrolyseurs ist und der Stromverbrauch für den Elektrolyseur für die Wasserstoffproduktion ohnehin- erforderlich ist, ist der Stromverbrauch für die Herstellung des Flüssigsauerstoffs mit dem hier vorgeschlagenen Verfahren deutlich geringer als 0,5 kWh/kg Flüssigsauerstoff, da nur die zusätzliche Leistung erforderlich ist, um die Kapazität der Kühleinheit bzw. des Verflüssigers zu erhöhen.

Ein Teil der elektrischen Leistung, die für den Betrieb des Elektrolyseurs und/oder der Kühl- bzw. Verflüssigungseinheiten erforderlich ist, kann durch Rückgewinnung der mechanischen Leistung erzeugt werden, die in kryogenen Turbinen erzeugt wird, die zur Expansion der Kältemittelströme im Wasserstoffverflüssiger (z.B. Wasserstoff oder Helium oder Neon oder eine Mischung davon) und/oder des Kältemittels im Stickstoffkühler bzw. -verflüssiger verwendet werden. Die kombinierte Produktion von Flüssigsauerstoff und Flüssigwasserstoff mit dem hier vorgeschlagenen Verfahren kann auch dazu verwendet werden, die Produktionskosten für Flüssigwasserstoff aus elektrochemisch erzeugtem Flüssigwasserstoff deutlich zu senken.

Anstatt einen Teil des trockenen Sauerstoffs zur Regeneration des Trocknerbetts wiederzuverwenden, kann ein sog. Zero-Loss-Trockner eingesetzt werden, bei dem der heiße, wasserhaltige Sauerstoff stromab der katalytischen Oxidation zur Regeneration des Trocknerbetts verwendet wird. Gekühltes Kühlwasser kann verwendet werden, um den Wassergehalt im Sauerstoffstrom vor dem Trockner zu reduzieren. Die Reaktionswärme der katalytischen Oxidation kann zur Regenerierung des Trockners genutzt werden. Im Falle einer Abschaltung des Elektrolyseurs muss weniger Sauerstoff verflüssigt werden. Der nicht benötigte überschüssige Flüssigstickstoff kann in einem Puffer des Kältemittelkreislaufs angesammelt werden, was zu einem Anstieg des Flüssigkeitsniveaus führt. Alternativ kann der aus dem Sauerstoffkondensator austretende gasförmige Stickstoff mit niedrigerer Temperatur durch einen speziellen Wärmerückgewinnungskanal im Hauptwärmetauscher des Kältemittelkreislaufs geleitet werden.

Eine Wasserstoffreinigungseinheit als katalytische Oxidations- und Temperaturwechseladsorptionseinheit oder ein kryogener Reiniger mit Flüssigstickstoff kann nach der Elektrolyseureinheit und vor der Wasserstoffverflüssiger-Coldbox installiert werden, um den erzeugten gasförmigen Wasserstoffstrom weiter zu reinigen. In einer weiteren Ausführungsform kann die Kühlung für die Verflüssigung des gasförmigen Sauerstoffs und die Kühlung des Wasserstoffs durch ein Kältemittelgemisch bereitgestellt werden, das aus zwei oder mehreren Kältemittelflüssigkeiten besteht, die in der Lage sind, bei einer Temperatur unter ca. 110 K effizient zu arbeiten, ohne sich zu verfestigen. Beispielsweise kann eine Mischung von Stickstoff mit anderen Fluiden eingesetzt werden.

Die Erfindung wird nachfolgend unter Bezugnahme auf die Figuren, die Ausgestaltungen der vorliegenden Erfindung veranschaulichen, weiter erläutert.

### Kurze Beschreibung der Figuren

Figur 1 zeigt eine Elektrolyseanordnung, die gemäß einer Ausgestaltung der Erfindung betrieben werden kann, in schematischer Darstellung.
Figur 2 zeigt eine Kühl- und Verflüssigungsanordnung zum Einsatz in einer Anlage gemäß einer Ausgestaltung der Erfindung in schematischer Darstellung.

### Ausführliche Beschreibung der Figuren

In den Figuren sind einander baulich oder funktional entsprechende Elemente mit identischen Bezugszeichen angegeben und werden der Übersichtlichkeit halber nicht wiederholt erläutert. Wenn nachfolgend auf Verfahrensschritte Bezug genommen wird, betreffen die entsprechenden Erläuterungen in gleicher Weise Anlagenkomponenten, mit denen diese Verfahrensschritte durchgeführt werden, und umgekehrt.

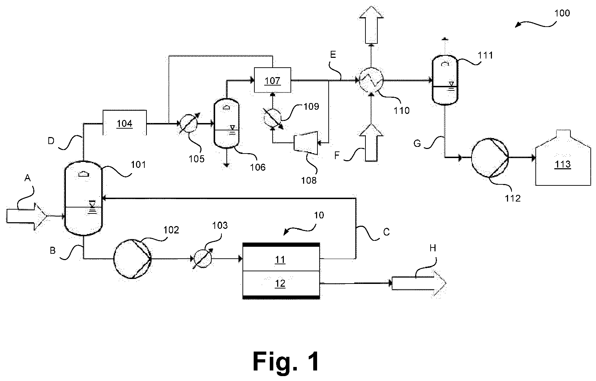

Figur 1 zeigt eine Elektrolyseanordnung, die gemäß einer Ausgestaltung der Erfindung betrieben werden kann, und die insgesamt mit 100 bezeichnet ist, in stark vereinfachter, schematischer Darstellung.

Der Elektrolyseanordnung 100, die als zentrale Komponente eine oder mehrere Elektrolysezellen 10 umfasst, wird ein Wasserstrom A zugeführt. Lediglich der einfacheren Beschreibung halber ist nachfolgend von "einer" Elektrolysezelle 10 die Rede. Der Wasserstrom A wird in einen Abscheider 101 eingespeist. Ein Wasserstrom B aus dem Abscheider 101 wird in einer Pumpe 102 flüssig auf Druck gebracht, in einem Wärmetauscher 103 abgekühlt und einer Anodenseite 11 der Elektrolysezelle 10 zugeführt. Von der Anodenseite 11 wird ein gewisse Mengen an Wasserstoff und Wasser enthaltender Rohsauerstoffstrom in Form eines Stoffstroms C gasförmig entnommen und in den Abscheider 101 zurückgespeist, wo sich in dem Stoffstrom C enthaltenes Wasser abscheidet und mit dem Wasserstrom B der Elektrolysezelle 10 wieder zugeführt wird.

Ein aus dem Abscheider 101 abgezogener, noch Wasserstoff und Restmengen an Wasser enthaltender Rohsauerstoffstrom D wird einer Katalyseeinheit 104 zugeführt, wo enthaltender Wasserstoff zu Wasser umgesetzt wird. Nach einer Kühlung in einem Wärmetauscher 105 wird das gebildete Wasser in einem Abscheider 106 abgeschieden. In einer Temperaturwechseladsorptionseinheit 107, die in an sich bekannter Weise mit einem Kreislaufverdichter 108 und einem diesem nachgeschalteten Wärmetauscher 109 betrieben wird, wird ein Reinsauerstoffstrom E gebildet, welcher in einem Wärmetauscher 110 gegen einen Flüssigstickstoffstrom F zumindest teilweise verflüssigt und in einem Abscheider 111 phasengetrennt wird. Aus dem Abscheider 109 in Form eines Stoffstroms G abgezogenes Flüssigsauerstoffprodukt wird mittels einer Pumpe 112 druckerhöht und in einen Tank 113 eingespeist.

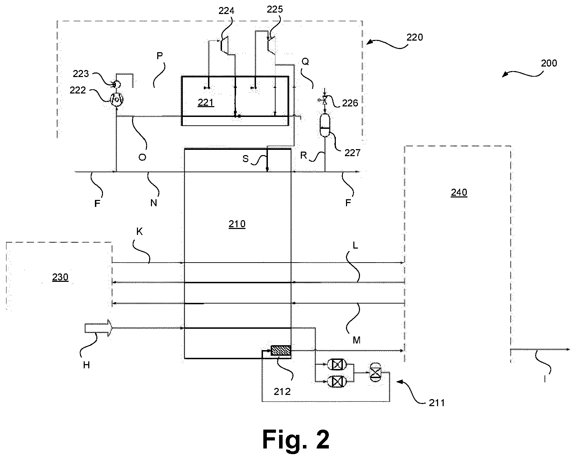

Die Bearbeitung eines von der Kathodenseite 12 der Elektrolysezelle 10 abgezogenen, gewisse Mengen an Sauerstoff und Wasser enthaltender Rohwasserstoffstroms H wird in der nachfolgenden Figur 2 veranschaulicht.

Figur 2 zeigt eine Kühl- und Verflüssigungsanordnung 200 zum Einsatz in einer Anlage gemäß einer Ausgestaltung der Erfindung, beispielsweise nachgeordnet der in Figur 1 gezeigten Anordnung 100, in schematischer Darstellung. Diese umfasst einen Wärmetauscher 210, eine Stickstoffkältemaschine 220 bzw. eine entsprechende Stickstoffverflüssigungseinheit, eine Wasserstoffverdichtungseinheit 230 und eine Wasserstoffverflüssigungseinheit 240. Weitere Komponenten, die den genannten Einheiten zugeordnet sind, werden nachfolgend erläutert.

Der auch hier mit H bezeichnete Rohwasserstoffstrom H wird in dem Wärmetauscher 210 vorgekühlt, unter Verwendung eines Adsorbersatzes 211 aufgereinigt, einer an sich bekannten Ortho-Para-Konvertierung 212 unterworfen und dann in der Wasserstoffverflüssigungseinheit 240 zu einem Flüssigwasserstoffprodukt I verflüssigt.

Mittels der Wasserstoffverdichtungseinheit 230 wird ein Hochdruckwasserstoffstrom bereitgestellt, der in dem Wärmetauscher 210 vorgekühlt und in die Wasserstoffverflüssigungseinheit 240 eingespeist wird. Von dort werden ein Mitteldruckwasserstoffstrom L und ein Niederdruckwasserstoffstrom M durch den Wärmetauscher 210 in die Verdichtungseinheit 230 zurückgeführt.

Die Stickstoffkältemaschine 220 wird mit dem bereits in Figur 1 veranschaulichten Stickstoffstrom F gespeist, der zuvor zur Verflüssigung des Sauerstoffstroms E verwendet wurde. Dieser wird mit einem in dem Wärmetauscher 210 erwärmtem Stickstoffstrom N und einem in einem Wärmetauscher 221 der Stickstoffkältemaschine 220 erwärmten Stickstoffstrom O vereinigt und in einem Stickstoffverdichter 222 mit nachgeschaltetem Wärmetauscher 223 zu einem Mitteldruckstickstoffstrom P verdichtet. Letzterer wird dem Wärmetauscher 221 zugeführt und diesem in Anteilen auf unterschiedlichen Temperaturniveaus entnommen. Auf Zwischentemperaturniveaus gasförmig entnommene Anteile werden in Expansionsturbinen 224 und 225 zur "Erzeugung" von Kälte entspannt und dem Wärmetauscher wieder zugeführt. Ein dem Wärmetauscher 221 kaltseitig entnommener und zumindest teilweise verflüssigter Anteil wird in Form eines Stoffstroms Q über ein Ventil 226 in einen Phasentrenner 227 entspannt.

Die dem Phasentrenner 227 entnommene Gasphase wird in den Wärmetauscher 221 zurückgeführt und mit den in den Expansionsturbinen 224 und 225 entspannten Anteilen zu dem Stoffstrom O vereinigt. Die dem Phasentrenner 227 entnommene Flüssigphase wird in Anteilen zur Bereitstellung der Stoffströme N und F verwendet. Ein Anteil des in der Expansionsturbine 225 entspannten Anteils kann in der dargestellten Weise in Form des Stoffstroms S ebenfalls zur Bereitstellung des Stoffstroms N verwendet werden.

Mit der Stickstoffkältemaschine 220 wird damit ein Kältemittel ("erstes Kältemittel" im hier verwendeten Sprachgebrauch) bereitgestellt, wobei hier der Wasserstoff des Hochdruckwasserstoffstroms K ("zweites Kältemittel" im hier verwendeten Sprachgebrauch) unter Verwendung eines ersten Teils hiervon in Form des Stoffstroms N vorgekühlt und zumindest ein Teil des Reinsauerstoffstroms E unter Verwendung eines zweiten Teils hiervon in Form des Stoffstroms F unter Erhalt eines Flüssigsauerstoffprodukts zumindest teilweise verflüssigt wird.

## Patentansprüche

1. Verfahren zur Herstellung eines Flüssigsauerstoffprodukts und eines Flüssigwasserstoffprodukts, wobei ein zumindest Wasser enthaltender Einsatzstrom einer Elektrolyse unterworfen wird, wobei in der Elektrolyse anodenseitig ein gasförmiger Rohsauerstoffstrom und kathodenseitig ein gasförmiger Rohwasserstoffstrom gebildet werden, wobei der gasförmige Rohwasserstoffstrom getrocknet und unter Erhalt eines Reinwasserstoffstroms von Verunreinigungen, insbesondere von Sauerstoff, befreit wird und der Reinwasserstoffstrom unter Verwendung eines in Form eines oder mehrerer Kältemittelströme bereitgestellten zweiten Kältemittels unter Erhalt eines Flüssigwasserstoffprodukts zumindest teilweise verflüssigt wird, wobei zumindest ein Teil des zweiten Kältemittels und/oder zumindest ein Teil des Reinwasserstoffstroms unter Verwendung eines ersten Teils eines in Form eines oder mehrerer Kältemittelströme bereitgestellten ersten Kältemittels gekühlt wird oder werden, und wobei der gasförmige Rohsauerstoff getrocknet und von Verunreinigungen, insbesondere von Wasserstoff, befreit wird, **dadurch gekennzeichnet, dass** zumindest ein Teil des Reinsauerstoffstroms unter Verwendung eines zweiten Teils des ersten Kältemittels unter Erhalt eines Flüssigsauerstoffprodukts zumindest teilweise verflüssigt wird.

2. Verfahren nach Anspruch 1, bei dem die Befreiung des Rohsauerstoffstroms von Verunreinigungen unter Erhalt des gasförmigen Reinsauerstoffstroms durch katalytische Oxidation zumindest eines Teils der Verunreinigungen und Abtrennung der Oxidationsprodukte, insbesondere Wasser, und/oder durch Chemisorption bewirkt wird.

3. Verfahren nach Anspruch 1, wobei das erste Kältemittel eine oder mehrere Komponenten umfasst, die aus Stickstoff, Luft, Argon, Kohlendioxid, Neon, Sauerstoff oder einem oder mehreren Kohlenwasserstoffen, jeweils in flüssigem und/oder gasförmigem Zustand, ausgewählt ist.

4. Verfahren nach Anspruch 1 oder 2, wobei die Kühlung und/oder die zumindest teilweise Verflüssigung zumindest eines Teils des Reinwasserstoffstroms und/oder eine Kühlung zumindest eines Teils des ersten Kältemittels und/oder die zumindest teilweise Verflüssigung zumindest eines Teils des Reinsauerstoffstroms räumlich voneinander getrennt durchgeführt werden.

5. Verfahren nach einem der vorstehenden Ansprüche, wobei die Elektrolyse anodenseitig bei einem ersten Druckniveau betrieben wird, das Flüssigsauerstoffprodukt auf ein zweites Druckniveau, das niedriger als das erste Druckniveau liegt, entspannt wird, und die Energie, die aus dem Druckunterschied zwischen dem ersten Druckniveau und dem zweiten Druckniveau zumindest teilweise für eine Bereitstellung des ersten und/oder des zweiten Kältemittels genutzt wird.

6. Verfahren nach einem der vorstehenden Ansprüche, wobei ferner zumindest ein weiteres Gas, insbesondere Stickstoff und/oder Argon und/oder ein Wasserstoff und/oder einen oder mehrere Kohlenwasserstoffe enthaltendes Gasgemisch, insbesondere Erdgas, unter Verwendung des ersten Kältemittels zumindest teilweise verflüssigt wird.

7. Verfahren nach einem der vorstehenden Ansprüche, wobei eine Speicherung des Flüssigsauerstoffprodukts und/oder des Flüssigstickstoffprodukts und/oder Flüssigwasserstoffprodukts und/oder des ersten und/oder des zweiten Kältemittels in einem oder mehreren Speichervolumen vorgenommen wird, das oder die in einer ersten Betriebsphase aufgebaut und in einer zweiten Betriebsphase nach der ersten Betriebsphase abgebaut wird oder werden.

8. Verfahren nach Anspruch 7, bei dem die erste Betriebsphase in einem Zeitraum mit geringeren Stromkosten und die zweite Betriebsphase in einem Zeitraum mit höheren Stromkosten durchgeführt wird.

9. Verfahren nach einem der vorstehenden Ansprüche, wobei zumindest ein Teil des Flüssigsauerstoffprodukts eine Druckerhöhung in flüssigem Zustand und einer anschließenden zumindest teilweisen Verdampfung unter Erhalt eines gasförmigen Drucksauerstoffprodukts unterworfen wird.

10. Verfahren nach einem der vorstehenden Ansprüche, wobei eine Verdichtung des gasförmigen Reinsauerstoffstroms in einem Verdichter oder Turbinenbooster vorgenommen wird.

11. Verfahren nach einem der vorstehenden Ansprüche, wobei zur Bereitstellung des ersten Kältemittels Luft unter Verwendung eines oder mehrerer Membranverfahren oder Adsorptionsverfahren aufgereinigt wird.

12. Verfahren nach einem der vorstehenden Ansprüche, wobei das erste und/oder das zweite Kältemittel unter Verwendung eines Gases aus einer Luftzerlegungsanlage bereitgestellt wird.

13. Verfahren nach einem der vorstehenden Ansprüche, wobei zur Bereitstellung von Kälte- und Verflüssigungsleistung ein oder mehrere Verdichter eingesetzt werden, die durch einen oder mehrere elektrische Motoren und/oder unter Verwendung einer oder mehrerer Verbrennungs- und/oder Dampfturbinen angetrieben werden.

14. Verfahren nach einem der vorstehenden Ansprüche, bei dem der zumindest Wasser enthaltende Einsatzstrom oder das in diesem enthaltene Wasser einer Aufbereitung unterworfen wird, die zumindest eine Entfernung von Argon, insbesondere durch Strippen, umfasst.

15. Anlage zur Herstellung eines Flüssigsauerstoffprodukts und eines Flüssigwasserstoffprodukts, die dafür eingerichtet ist einen zumindest Wasser enthaltenden Einsatzstrom einer Elektrolyse zu unterwerfen und in der Elektrolyse anodenseitig einen gasförmigen Rohsauerstoffstrom und kathodenseitig einen gasförmigen Rohwasserstoffstrom zu bilden, und die ferner dazu eingerichtet ist, den gasförmigen Rohwasserstoffstrom zu trocknen und unter Erhalt eines Reinwasserstoffstroms von Verunreinigungen, insbesondere von Sauerstoff, zu befreien, wobei die Anlage Mittel aufweist, die dafür eingerichtet sind, den Reinwasserstoffstrom unter Verwendung eines in Form eines oder mehrerer Kältemittelströme bereitgestellten zweiten Kältemittels unter Erhalt eines Flüssigwasserstoffprodukts zumindest teilweise zu verflüssigen und dabei zumindest einen Teil des zweiten Kältemittels und/oder zumindest einen Teil des Reinwasserstoffstroms unter Verwendung eines ersten Teils eines in Form eines oder mehrerer Kältemittelströme bereitgestellten ersten Kältemittels zu kühlen, und wobei die Anlage ferner Mittel aufweist, die dafür eingerichtet sind, den gasförmigen Rohsauerstoff zu trocknen und von Verunreinigungen, insbesondere von Wasserstoff, zu befreien, **dadurch gekennzeichnet, dass** Mittel bereitgestellt sind, die dafür eingerichtet sind, zumindest einen Teil des Reinsauerstoffstroms unter Verwendung eines zweiten Teils des ersten Kältemittels unter Erhalt eines Flüssigsauerstoffprodukts zumindest teilweise zu verflüssigen.
